# EUROPÄISCHE PATENTSCHRIFT

(11) **EP 3 573 739 B1**
(45) Veröffentlichungstag und Bekanntmachung des Hinweises auf die Patenterteilung: **13.05.2020**
(21) Anmeldenummer: 17816676.5
(22) Anmeldetag: 11.12.2017
(51) Int. Cl.: B01D 53/04, B01D 53/047, B60H 3/06

(54) **EINRICHTUNG ZUR REINIGUNG VON MIT CO2 BELADENER LUFT IN DER FAHRGASTZELLE EINES KRAFTFAHRZEUGES IM UMLUFTBETRIEB MITTELS EINER ADSORPTIONSEINRICHTUNG**
DEVICE FOR CLEANING AIR LADEN WITH CO2 IN THE PASSENGER COMPARTMENT OF A MOTOR VEHICLE IN RECIRCULATED-AIR MODE BY MEANS OF AN ADSORPTION DEVICE
DISPOSITIF DE NETTOYAGE D'AIR CHARGÉ DE CO2 DANS L'HABITACLE D'UN VÉHICULE AUTOMOBILE EN MODE CIRCULATION D'AIR AU MOYEN D'UN DISPOSITIF D'ADSORPTION

(30) Priorität: 27.01.2017 DE 102017201367
(43) Veröffentlichungstag der Anmeldung: 04.12.2019
(73) Patentinhaber: Audi AG, 85045 Ingolstadt (DE)
(72) Erfinder: MÜLLER-HELLWIG, Simone, 85051 Ingolstadt (DE); HEIGL, Roland, 85117 Eitensheim (DE); SEIFERT, Hagen, 93049 Regensburg (DE); KRAJETE, Alexander, 4020 Linz (AT); SEIFERT, Arne, 1120 Wien (AT)
(86) Internationale Anmeldenummer: PCT/EP2017/082125
(87) Internationale Veröffentlichungsnummer: WO 2018/137831

(56) Entgegenhaltungen:
- DE-A1-102012 207 382
- DE-A1-102014 015 231

## Beschreibung

Die Erfindung betrifft eine Einrichtung zur Reinigung von in einem geschlossenen Raum befindlicher, mit CO₂ beladener Luft, umfassend zwei Adsorptionseinrichtungen zum Adsorbieren von CO₂ aus der den Adsorptionseinrichtungen zugeführten Luft, jeweils eine den Adsorptionseinrichtungen zugeordnete Desorptionseinrichtung zum Desorbieren von adsorbiertem CO₂, sowie jeweils eine Abführeinrichtung zum Abführen des desorbierten CO₂, wobei die eine Adsorptionseinrichtung adsorbiert, während die andere desorbiert wird, und umgekehrt.

In Räumen, die nicht oder nur unzureichend belüftet werden, steigt bei Anwesenheit von Menschen die Konzentration von Kohlenstoffdioxid (CO₂) schnell stark an, da es mit der Atemluft ausgeatmet wird. Während die CO₂-Konzentration der Umgebungsluft bei ca. 400 ppm liegt, kann die Konzentration in einem geschlossenen Raum innerhalb weniger Minuten auf 2.000 ppm und mehr ansteigen. Ab 3.000 ppm nimmt man die Luft als unangenehm wahr, mitunter stellt sich ein leichter Kopfdruck ein, der bei weiter steigender CO₂-Konzentration zu Kopfschmerz führen kann. Auch sinkt mit steigender CO₂-Konzentration die Konzentrationsfähigkeit.

Je kleiner der Raum ist, in dem sich eine oder mehrere Personen befinden, umso schneller ist ein CO₂-Anstieg mit den genannten Nachteilen zu verzeichnen. Ein Beispiel für einen solchen kleinen, geschlossenen Raum ist die Fahrgastzelle eines Kraftfahrzeugs, also der Fahrzeuginnenraum beispielsweise eines Pkw. Befinden sich beispielsweise vier oder fünf Personen im Fahrzeug, so wird eine beachtliche Menge an CO₂ innerhalb des kleinen Volumens durch die Atemluft freigesetzt. Natürlich besteht die Möglichkeit, dem CO₂-Anstieg entgegenzuwirken, indem Frischluft zugeführt wird, also beispielsweise ein Fenster geöffnet wird oder über eine Belüftungseinrichtung respektive Klimaanlage von außerhalb des Fahrzeugs Frischluft zugeführt wird. Dies ist jedoch nicht immer gewünscht respektive zweckmäßig. Zum einen geht hierüber im Raum vorhandene Wärme oder Kälte verloren, es muss also im Anschluss wieder Energie aufgewendet werden, um die Luft zu erwärmen oder zu kühlen. Darüber hinaus ist insbesondere bei Kraftfahrzeugen aufgrund der Umgebungsbedingungen mitunter ein Zuführen von Frischluft nicht möglich, beispielsweise wenn in diesem Fall Schadstoffe aus der Umgebungsluft, die von anderen Verkehrsteilnehmern produziert werden, in die Fahrgastzelle eingebracht werden würden, oder im Falle von Regen oder Schneefall oder starkem Wind, in welchen Fällen ein Fenster nicht geöffnet werden kann. Aus diesem Grund wird eine Fahrzeugbelüftungseinrichtung in solchen Fällen oft im sogenannten Umluftbetrieb betrieben, d.h. dass die Innenraumluft zirkuliert und beispielsweise über eine Klimaanlage auf konstanter Temperatur gehalten wird, wobei in diesem Umluftbetrieb keine oder nur in äußerst geringem Maß Frischluft zugeführt wird. Ein Luftaustausch ist hier also nicht möglich, verbunden mit einem entsprechenden CO₂-Anstieg.

Aus US 3 906 945 A ist bekannt, in der Luft enthaltenes CO₂ durch Adsorption zu reduzieren, wozu das das CO₂ enthaltende Gas durch eine Kammer enthaltend Lithiumhydroxid geführt wird, mit dem das CO₂ unter Anwesenheit von Wasser zu Lithiumhydrogencarbonat reagiert. Die gereinigte Luft kann erneut dem Raum zugeführt werden.

In DE 10 2012 207 382 A1 ist ein Kraftfahrzeug offenbart, bei dem Trennmittel zum Abtrennen von gasförmigem Kohlendioxid aus der Luft des Fahrgastinnenraums vorgesehen sind. Den Trennmitteln wird hierbei Luft aus dem Fahrgastinnenraum über Luftfördermittel zugeführt. Die Trennmittel sind dazu geeignet, einen ersten Luftstrom mit einer geringeren CO₂-Konzentration als die Luft des Fahrgastinnenraums und einen zweiten Luftstrom zu generieren, wobei der erste Luftstrom in den Fahrgastinnenraum und der zweite Luftstrom in die Fahrgastzelle umgebende Luft abgegeben wird.

Eine weitere gattungsbildende Klimatisierungsvorrichtung für einen abgeschlossenen Raum, bei der ein Filter in Absorptions- sowie Desorptionsphasen betrieben wird, ist aus DE 10 2014 015 231 A1 bekannt.

Der Erfindung liegt das Problem zugrunde, eine Luftreinigungseinrichtung anzugeben, die eine effiziente, weitgehend kontinuierliche Luftreinigung ermöglicht.

Zur Lösung des Problems ist bei einer Einrichtung der eingangs genannten Art erfindungsgemäß vorgesehen, dass jeder der Adsorptionseinrichtungen eine Filtereinrichtung vor- oder nachgeschaltet ist, mittel der in der zuzuführenden oder der gereinigten, dem Raum wieder zuzuführenden Luft enthaltene Schadstoffe ausfilterbar sind und dass jeder Adsorptionseinrichtung ein Lüfter vorgeschaltet ist.

Die erfindungsgemäße Reinigungseinrichtung sieht zum einen die CO₂-Entfernung durch Adsorption mittels der Adsorptionseinrichtung vor. Die gereinigte Luft wird über eine Abführeinrichtung wieder abgeführt, kann also beispielsweise ohne weiteres dem Raum erneut zugeführt werden. Die Abführeinrichtung ist in diesem Fall also eine Zuführeinrichtung für die gereinigte Luft in den Raum.

Des Weiteren weist die Einrichtung eine Desorptionseinrichtung auf, die der Regeneration des mit CO₂ beladenen Adsorptionsmittels der Adsorptionseinrichtung dient. Mittels dieser Desorptionseinrichtung wird das am Adsorptionsmittel adsorbierte CO₂ wieder ausgetrieben und entfernt, so dass das Adsorptionsmittel wieder aufnahmefähig ist. Die Adsorptionseinrichtung kann also anschließend sofort wieder die Luft reinigen, ohne dass ein Austausch des Adsorptionsmittels o.ä. erforderlich ist. Das desorbierte CO₂ wird über eine geeignete Abführeinrichtung ausgeleitet, wobei mittels der Abführeinrichtung natürlich sichergestellt wird, dass das CO₂ nicht wieder in den geschlossenen Raum gelangt.

Mit einer solchen Einrichtung ist beispielsweise bei dem exemplarisch beschriebenen Kraftfahrzeug ein dauerhafter Umluftbetrieb möglich, denn zum einen ist die Adsorptionseinrichtung in der Lage, über einen relativ langen Zeitraum CO₂ zu binden, mithin also die Luft zu reinigen. Darüber hinaus kann über die Desorptionseinrichtung eine schnelle Regeneration des Adsorptionsmittels erfolgen, so dass dieses bis auf die kurze Regenerationsdauer nahezu kontinuierlich einsatzfähig ist. Das desorbierte CO₂ wird entfernt, während andererseits die gereinigte Luft kontinuierlich über eine entsprechende Zuführeinrichtung wieder in den Raum geleitet wird.

Die Adsorptionseinrichtungen selbst umfassen bevorzugt jeweils ein mit einem Adsorptionsmittel gefülltes Gehäuse, denen die mit CO₂ beladene, über eine Fördereinrichtung, wie einen geeigneten Lüfter, transportierte Luft über jeweils eine Luftzuführleitung zuführbar ist. Als Adsorptionsmittel kann beispielsweise ein festes Adsorbermaterial basierend auf anorganischen Materialien des Typs Al₂O₃ oder Aluminiumsilikat verwendet werden. Auch sind geträgerte Materialien mit anorganischer/organischer Matrix verwendbar. Die genannten Materialien ermöglichen es, CO₂ aus der Umluft regenerativ und vorzugsweise physisorptiv zu binden. Sie sind bei moderaten Regenerationstemperaturen (vorzugsweise zwischen 60 - 200 °C) regenerierbar, d.h., dass die Desorption bei diesen relativ geringen Temperaturen erfolgen kann, was mit relativ geringem Energieaufwand möglich und daher vorteilhaft ist. Sie weisen ferner eine hohe Stabilität auf, so dass viele Regernationszyklen gefahren werden können, ohne dass es zu einer Degradation kommt, auch kommt es zu keiner Geruchsbelästigung. Auch sind diese Materialien nicht toxisch. Die Aufzählung der verwendbaren Adsorptionsmittel, die bevorzugt in Pulver- oder Granulatform vorliegen, ist nicht abschließend, vielmehr kann jedes Absorptionsmittel, das einerseits ein hinreichendes Absorptionsvermögen besitzt, andererseits auch für den jeweiligen Einsatzzweck der Einrichtung geeignet und insbesondere mit relativ geringem Energieaufwand regenerierbar ist, verwendet werden.

Kommt die Einrichtung bei einem Kraftfahrzeug zur Verwendung, so kann folglich aufgrund der laufenden CO₂-Reduktion in der Raumluft das Fahrzeug lange Zeit im Umluftbetrieb gefahren werden. Es ist also eine autonome Fahrweise möglich, bei der keine Außenluft und somit auch keine Schadstoffe aus der Umgebungsluft, von anderen Verkehrsteilnehmer produziert, angesaugt und im Fahrzeug verteilt werden. Dies ist insbesondere bei Einsatz eines Kraftfahrzeugs in Gegenden mit hoher Luftverschmutzung, sei es durch Schadstoffe, sei es durch Feinstaub oder dergleichen, von Vorteil.

Mittels der Abführeinrichtung wird wie beschrieben das desorbierte CO₂ abgeführt. Hierzu kann gemäß einer zweckmäßigen Weiterbildung mittels der Abführeinrichtung ein Transportgas zu den Adsorptionseinrichtungen förderbar und das Gemisch aus Transportgas und desorbiertem, also wieder gasförmigem CO₂ über jeweils eine Abluftleitung abgeführt werden. Das Gehäuse, in dem die Adsorption, aber auch die Desorption erfolgt, ist folglich in ein entsprechendes Leitungssystem eingebunden, so dass einerseits die zu reinigende Luft zugeführt werden kann, andererseits aber auch das Transportgas zum Abführen des desorbierten CO₂. Auch auslassseitig sind entsprechende Leitungen vorgesehen, nämlich zum einen eine Rückführleitung für die gereinigte Luft in den Raum, zum anderen die Abluftleitung. Natürlich sind entsprechende Ventileinrichtungen und Ähnliches vorgesehen, um die jeweiligen Luftwege zu schalten.

Das zugeführte Transportgas nimmt also das CO₂ mit, das Gasgemisch wird über die Abluftleitung abgeführt. Dabei kann das Transportgas entweder z. B. mittels einer Fördereinrichtung oder direkt aus einem Transportgasreservoir, beispielsweise einer Transportgaskartusche, gezogen werden, oder es handelt sich um Außenluft, die von außerhalb des geschlossenen Raumes abgezogen wird. Dies ist ohne weiteres möglich, als das Transportgas lediglich zum Abführen des CO₂ dient und in keinem Fall in den Raum gelangt.

Die Desorption kann auf unterschiedliche Weise erfolgen. Zum einen kann die Desorption eine Heizeinrichtung zum Erwärmen der Adsorptionseinrichtung respektive des Adsorptionsmittels umfassen. Mittels dieser Heizeinrichtung wird folglich das Adsorptionsmittel erwärmt, wobei eine Erwärmung auf ca. 100 - 150° C in der Regel ausreichend ist, um das CO₂ schnell zu desorbieren. Dabei kann die Heizeinrichtung nur das Adsorptionsmittel oder das gesamte Gehäuse, in dem das Adsorptionsmittel enthalten ist, also die Adsorptionskartusche erwärmen. Sobald die Beheizung beendet ist, kühlt das Adsorptionsmittel ab und kann erneut CO₂ aufnehmen.

Alternativ kann auch eine Einrichtung zur Reduzierung des Drucks in der Adsorptionseinrichtung vorgesehen sein. Es wird also in der Adsorptionseinrichtung respektive dem Gehäuse enthaltend das Adsorptionsmittel ein entsprechender Unterdruck erzeugt, der dazu führt, dass das nur adsorbierte CO₂ erneut abdampft. Hierzu wird natürlich die Adsorptionseinrichtung respektive das Gehäuse, also die Adsorptionskartusche, über geeignete Ventile hermetisch abgeschottet, so dass der Unterdruck erzeugt werden kann.

Schließlich besteht die Möglichkeit, eine Einrichtung zum Zu- und Durchführen eines die Desorption veranlassenden Gases durch die Adsorptionseinrichtung vorzusehen. Hier wird also mit Hilfe eines durchgeleiteten Gases, das das nur lose gebundene CO₂ auf- und mitnimmt, die Desorption vorgenommen.

Natürlich ist es möglich, auch mehrere dieser Adsorptionsmöglichkeiten vorzusehen, beispielsweise die Beheizung in Verbindung mit der Zufuhr eines Gases, wobei dieses Gas dann gleichzeitig das bereits zuvor beschriebene Transportgas darstellt. Als Transportgas kann durchaus auch Innenraumluft verwendet werden, also Luft, die aus dem geschlossenen Raum abgezogen wird. Dies deshalb, da hierfür nicht eine allzu große Gasmenge benötigt wird.

Erfindungsgemäß ist jeder der Adsorptionseinrichtungen eine Filtereinrichtung vor- oder nachgeschaltet sein, mittels der in der zuzuführenden oder der gereinigten, dem Raum wieder zuzuführenden Luft enthaltene Schadstoffe ausfilterbar sind. Es wird also neben der CO₂-Reinigung auch eine Luftreinigung in Bezug auf weitere, ungewünschte Komponenten vorgenommen. Die Filtereinrichtungen sind beispielsweise zum Filtern von NO, NO₂, CO, Feinstaub, Kohlenwasserstoffen und/oder flüchtigen organischen Stoffen ausgebildet, das heißt, dass ein oder eine Mehrzahl weiterer schädlicher Substanzen mittels dieser Filtereinrichtung zusätzlich zum CO₂ aus der Luft gefiltert werden können. Diese Filtereinrichtung, beispielsweise in Form von Molekularsieben, Zeolithen o.ä. können der Adsorptionseinrichtung, also entweder dem Adsorptionsgehäuse selbst, oder dem Adsorptionsmittel, dann gegebenenfalls im Adsorptionsgehäuse, vor- oder nachgeschaltet sein.

Wie einleitend beschrieben ist es denkbar, nur eine Adsorptionseinrichtung vorzusehen, die, wenn sie desorbiert wird, also regeneriert werden soll, diskontinuierlich betrieben wird. Denn eine Adsorption ist temporär dann nicht möglich, wenn die Desorption vorgenommen wird, wenn also das Adsorptionsmittel beispielsweise beheizt wird. In diesem Fall wird die Adsorption kurzzeitig unterbrochen, und zwar so lange, bis das CO₂. weitestgehend oder vollständig desorbiert oder abgeführt ist. Danach kann der Adsorptionsvorgang umgehend wieder aufgenommen werden.

Erfindungsgemäß ist vorgesehen, dass zwei Adsorptionseinrichtungen mit jeweils zugeordneter Desorptionseinrichtung und Abführeinrichtung vorgesehen sind, wobei die eine Adsorptionseinrichtung adsorbiert, während die andere desorbiert wird, und umgekehrt. Hier ist also aufgrund der redundanten Anordnung zweier Adsorptionseinrichtungen nebst zugeordneter Desorptionseinrichtungen und Abführeinrichtungen ein kontinuierlicher Adsorptionsmodus vorgesehen. Denn es befindet sich stets eine Adsorptionseinrichtung im Adsorptionsmodus, während die andere desorbiert wird, und umgekehrt. Auf diese Weise kann kontinuierlich adsorbiert werden, da stets eine Adsorptionseinrichtung zur Verfügung steht.

Neben der Einrichtung selbst betrifft die Erfindung ferner ein Kraftfahrzeug umfassend eine einen geschlossenen Raum bildende Fahrgastzelle sowie eine Einrichtung zur Reinigung von in der Fahrgastzelle befindlicher, mit CO₂ beladener Luft gemäß der vorbeschriebenen Art.

Des Weiteren kann eine Belüftungseinrichtung, insbesondere umfassend eine Klimaanlage, vorgesehen sein, die in einem Umluftbetrieb betreibbar ist, und die mit der Einrichtung zur Reinigung der Luft derart verbunden ist, dass aus der Fahrgastzelle abgezogene Luft der Einrichtung zuführbar und gereinigte Luft in die Fahrgastzelle rückführbar ist.

Je nachdem, um welche Art von Adsorptionsmittel es sich handelt, wie also dessen Adsorptionskapazität ist, und wie groß die Menge an Adsorptionsmittel gewählt wird, ist es ohne weiteres möglich, in einem erfindungsgemäßen Kraftfahrzeug einen Umluftbetrieb von 60 Minuten oder auch deutlich mehr realisieren zu können, ohne dass Frischluft zugeführt werden muss. Dies steigert den Fahrkomfort merklich, insbesondere in Gegenden mit entsprechender Luftverschmutzung. Dem trägt ferner der Umstand Rechnung, dass mit der erfindungsgemäßen Einrichtung respektive bei dem erfindungsgemäßen Kraftfahrzeug auch andere Schadstoffe oder geruchsintensive Stoffe über die entsprechende Filtereinrichtung aus der Luft gefiltert werden können. Durch die Luftreinigung stellt sich auch hinsichtlich der Fahrsicherheit ein Vorteil ein, da eine aufgrund erhöhter CO₂-Konzentration im Fahrzeug resultierende Müdigkeit, bis hin zu einem potentiellen Sekundenschlaf, der zu Unfällen führen kann, vermieden wird.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung eines Kraftfahrzeugs mit einer Luftreinigungseinrichtung einer ersten Ausführungsform, und
- Fig. 2: eine Prinzipdarstellung einer Luftreinigungseinrichtung einer zweiten Ausführungsform.

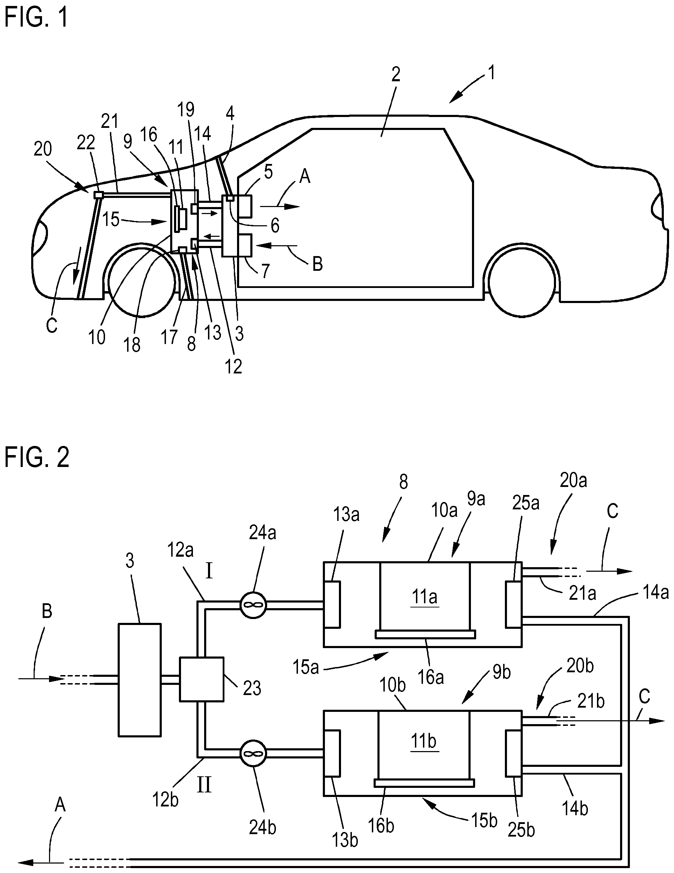

Fig. 1 zeigt ein Kraftfahrzeug 1, umfassend eine einen geschlossenen Raum bildende Fahrgastzelle 2 mit zugeordneter Belüftungseinrichtung 3, beispielsweise in Form einer oder umfassend eine Klimaanlage. Im Normalbetrieb wird über eine oder mehrere Luftzuführleitungen 4 Außenluft angesaugt und, gegebenenfalls nach Klimatisierung, über eine oder mehrere Luftauslässe 5 in die Fahrgastzelle 2 abgegeben, wie durch den Pfeil A dargestellt ist.

Die Belüftungseinrichtung 3 ist jedoch auch in einem Umluftbetrieb betreibbar, in diesem Fall wird über eine Ventileinrichtung 6 die Luftzuführleitung 4 geschlossen. Über die Belüftungseinrichtung 3, die natürlich über einen oder mehrere geeignete Lüfter oder Gebläse oder ähnliches verfügt, wird Luft aus dem Raum 2 angesaugt, wie durch den Pfeil B dargestellt ist. Die Ansaugung erfolgt über einen oder mehrere Ansaugeinlässe 7.

Die angesaugte, mit CO₂ beladene Luft wird in einer Einrichtung 8 zur Reinigung der Luft vom CO₂ zugeführt. Die Einrichtung 8 umfasst eine Adsorptionseinrichtung 9, beispielsweise in Form einer Adsorptionskartusche umfassend ein Gehäuse 10 mit einem darin befindlichen Adsorptionsmittel 11. Über eine Zuführleitung 12 wird die mittels eines Lüfters oder ähnlichem geförderte, mit CO₂ beladene Luft dem Gehäuse 10 zugeführt. Im Gehäuse 10 ist eine Filtereinrichtung 13 vorgesehen, die in der zugeführten Luft enthaltene andere Schadstoffe, wie beispielsweise NO, NO₂, CO oder Feinstaub oder ähnliches herausfiltert. Sodann gelangt die mit CO₂ beladene Luft in das Gehäuse 10 und in Kontakt mit dem Adsorptionsmittel 11, an dem das in der Luft enthaltene CO₂ adsorbiert wird. Die gereinigte Luft wird über eine Rückführleitung 14 erneut über die Belüftungseinrichtung 3 und den oder die Luftauslässe 5 in den Innenraum gefördert. Es findet hier also eine Luftzirkulation statt, Außenluft wird nicht in die Fahrgastzelle 2 gefördert, lediglich die Innenluft wird unter Reinigung umgewälzt.

Mit der Zeit belädt sich das Adsorptionsmittel mit CO₂. Um seine Adsorptionseigenschaften wieder zu regenerieren, ist eine Desorptionseinrichtung 15, hier in Form einer Heizeinrichtung 16 vorgesehen, die es ermöglicht, das Adsorptionsmittel 11 auf eine Temperatur zu heizen, in der das adsorptiv gebundene CO₂ wieder desorbiert wird, also sich vom Adsorptionsmittel 11 löst und in die Umgebung abdampft. Um dieses CO₂ aus der Adsorptionseinrichtung 9 auszutragen, wird ein Transportgas in das Gehäuse 10 geleitet, bei dem es sich beispielsweise um Innenraumluft handeln kann, die über die Zuführleitung 12 zugeführt wird oder um Außenluft, die über die Zuführleitung 17 zugeführt wird. Dieser Zuführleitung 17 ist eine Ventileinrichtung 18 zugeordnet, die nur dann geöffnet wird, wenn Luft von außerhalb zugeführt werden soll, um das desorbierte CO₂ auszutragen. Die Rückführleitung 14 wird in diesem Fall über ein Ventilelement 19 geschlossen, um zu verhindern, dass desorbiertes CO₂ in den Innenraum gelangt.

Zum Abführen ist eine Abführeinrichtung 20 vorgesehen, umfassend eine Abführleitung 21, der eine Ventileinrichtung 22 zugeordnet ist. Diese Abführleitung 21 wird über die Ventileinrichtung 22 nur geöffnet, wenn desorbiertes CO₂ abgeführt werden soll. Die abzuführende Luft, die mit desorbiertem CO₂ beladen ist, wird, wie durch den Pfeil C gezeigt, nach außen abgeleitet.

Sobald die Regeneration beendet ist, also die Desorptionseinrichtung 15 respektive die Heizeinrichtung 16 abgeschaltet ist, wird auch die Zufuhr des Transportgases, sei es Innenraumluft, sei es Außenluft, beendet und die Abführleitung 21 geschlossen. Das Adsorptionsmittel 11 ist regeneriert, kann also im dann fortgesetzten Umluftbetrieb wieder CO₂ aus der umgewälzten Innenraumluft aufnehmen, und zwar so lange, bis ein nächster Desorptionszyklus ansteht. Der Grad der Beladung des Adsorptionsmittels 11 mit CO₂ kann entweder über eine geeignete, nicht näher gezeigte Messeinrichtung gemessen werden oder anhand der Zeitdauer, während welcher das Fahrzeug im Umluftbetrieb betrieben wird und mithin eine Adsorption erfolgt, ermittelt werden.

Fig. 1 zeigt wie beschrieben ein Kraftfahrzeug, das lediglich eine Adsorptionseinrichtung 9 aufweist. Fig. 2 zeigt demgegenüber eine Einrichtung 8 zum Reinigen von Luft, die zwei separate Adsorptionseinrichtungen 9a, 9b aufweist, denen separate Desorptionseinrichtungen 15a, 15b zugeordnet sind, beispielsweise wiederum Heizeinrichtungen 16a, 16b, und denen auch entsprechende Abführeinrichtungen 20a, 20b zugeordnet sind. Es sind hier also zwei redundante Systeme vorgesehen, die dem Grunde nach jedoch genauso arbeiten wie bezüglich Fig. 1 beschrieben. Infolgedessen kann bezüglich des Grundprinzips auf die Ausführung zu Fig. 1 verwiesen werden, auch hinsichtlich der Zufuhr etwaigen Transportgases etc., auch wenn dies hier nicht näher gezeigt ist.

Bei dieser Ausgestaltung wird also über die Belüftungseinrichtung 3, gegebenenfalls über deren Klimaanlage, im Umluftbetrieb die Luft aus dem Innenraum, wie durch den Pfeil B dargestellt ist, angesaugt. Ihr ist eine Ventileinrichtung 23 nachgeschaltet, die dazu dient, die angesaugte respektive geförderte Luft über die Zuführleitungen 12a, 12b entweder auf den Reinigungszweig I oder den Reinigungszweig II zu leiten. Die weitere Förderung erfolgt beispielsweise über entsprechende Lüfter 24a, 24b, die den jeweiligen Reinigungszweigen I, II zugeordnet sind. Da jede Adsorptionseinrichtung 9a, 9b eine vorgeschaltete Filtereinrichtung 13a, 13b aufweist, erfolgt auch hier eine Filtration etwaiger Schadstoffe. An den Ausgängen der jeweiligen Adsorptionseinrichtungen 9a, 9b respektive deren Gehäuse 10a, 10b sind entsprechende Ventileinrichtungen 25a, 25b vorgesehen, die je nach Betriebsmodus die abzuführende Luft entweder auf die Rückführleitung 14a bzw. 14b leiten, wenn es sich um gereinigte Luft handelt, oder die die beladene, das desorbierte CO₂ enthaltende Luft auf die Abführleitungen 21a, 21b leiten und abzuführen (vgl. Pfeil C). Die Rückführleitungen 14a, 14b sind zusammengeführt, die gereinigte Luft kann, wie durch den Pfeil A dargestellt ist, wieder in den Innenraum rückgeführt werden. Natürlich können auch die beiden Abführleitungen 21a, 21b nachfolgend miteinander gekoppelt werden und zu einem gemeinsamen Auslass führen.

Im Betrieb arbeitet entweder der Reinigungszweig I oder der Reinigungszweig II im Adsorptionsmodus, während der jeweils andere Reinigungszweig II oder I im Desorptionsmodus arbeitet. Das heißt, dass im einen Zweig adsorbiert wird, während der andere desorbiert und damit regeneriert wird. Daher steht in jedem Fall eine voll funktionsfähige Adsorptionseinrichtung mit einem regenerierten respektive CO₂ aufnehmenden Adsorptionsmittel 11a bzw. 11b zur Verfügung.

Die Steuerung der einzelnen Komponenten erfolgt über eine oder mehrere, hier nicht näher gezeigte Steuerungseinrichtungen. Diese steuert bzw. steuern den entsprechenden Betrieb beispielsweise der Desorptionseinrichtungen 15, 15a, 15b oder der verschiedenen Ventileinrichtungen 18, 19, 22, 23, 25a, 25b. Gegebenenfalls werden hierüber auch die diversen Lüfter- oder Gebläse respektive der Betrieb der Belüftungseinrichtung 3 gesteuert.

Die Adsorptionsrichtungen 9, 9a, 9b sind bevorzugt in Form kompakter Kartuschen ausgeführt, die über entsprechende Ein- und Auslässe, an denen die entsprechenden Leitungen angeschlossen werden können, verfügen. Die entsprechenden Filtereinrichtungen 13, 13a, 13b können dabei im Inneren der Kartuschen vorhanden sein oder außerhalb davon angeordnet sein. Bevorzugt handelt es sich bei diesen Filtereinrichtungen um Einwegfilter, die im Rahmen der üblichen Fahrzeugwartung ausgetauscht werden können. Diese Filtereinrichtungen sind jedoch nicht zwingend.

## Patentansprüche

1. Einrichtung zur Reinigung von in einem geschlossenen Raum befindlicher, mit CO₂ beladener Luft, umfassend zwei Adsorptionseinrichtungen (9a, 9b) zum Adsorbieren von CO₂ aus der den Adsorptionseinrichtungen (9a, 9b) zugeführten Luft, jeweils eine den Adsorptionseinrichtungen (9a, 9b) zugeordnete Desorptionseinrichtung (15a, 15b) zum Desorbieren von adsorbiertem CO₂, sowie jeweils eine Abführeinrichtung (20a, 20b) zum Abführen des desorbierten CO₂, wobei die eine Adsorptionseinrichtung (9a, 9b) adsorbiert, während die andere desorbiert wird, und umgekehrt, **dadurch gekennzeichnet, dass** jeder der Adsorptionseinrichtungen (9, 9a, 9b) eine Filtereinrichtung (13, 13a, 13b) vor- oder nachgeschaltet ist, mittels der in der zuzuführenden oder der gereinigten, dem Raum wieder zuzuführenden Luft enthaltene Schadstoffe ausfilterbar sind und dass jeder Adsorptionseinrichtung (9a, 9b) ein Lüfter (24a, 24b) vorgeschaltet ist.

2. Einrichtung nach Anspruch 1, **dadurch gekennzeichnet, dass** die Adsorptionseinrichtungen (9a, 9b) jeweils ein mit einem Adsorptionsmittel (11a, 11b) gefülltes Gehäuse (10a, 10b) umfassen, denen die mit CO₂ beladene, über eine Fördereinrichtung transportierte Luft über jeweils eine Luftzuführleitung (12a, 12b) zuführbar ist.

3. Einrichtung nach Anspruch 1 oder 2, **dadurch gekennzeichnet, dass** mittels der Abführeinrichtung (20a, 20b) ein Transportgas zu den Adsorptionseinrichtungen (9a, 9b) förderbar und das Gemisch aus Transportgas und CO₂ über jeweils eine Abluftleitung (21a, 21b) abführbar ist.

4. Einrichtung nach Anspruch 3, **dadurch gekennzeichnet, dass** die Abführeinrichtungen (21a, 21b) jeweils eine Fördereinrichtung zum Fördern des Transportgases aus einem Transportgasreservoir oder von außerhalb oder innerhalb des geschlossenen Raums umfassen.

5. Einrichtung nach Anspruch 3 oder 4, **dadurch gekennzeichnet, dass** in den Abluftleitungen (21a, 21b) jeweils eine zum Abführen des Gemischs zu öffnende Ventileinrichtung (25a, 25b) vorgesehen ist oder den Abluftleitungen (21a, 21b) jeweils eine solche Ventileinrichtung (22, 25a, 25b) vorgeschaltet ist.

6. Einrichtung nach einem der vorangehenden Ansprüche, **dadurch gekennzeichnet, dass** die Desorptionseinrichtungen (15a, 15b) jeweils eine Heizeinrichtung (16a, 16b) zum Erwärmen des Adsorptionsmittels (11a, 11b) und/oder eine Einrichtung zur Reduzierung des Drucks in den Adsorptionseinrichtungen (9a, 9b) und/oder eine Einrichtung zum Zu- und Durchführen eines die Desorption veranlassenden Gases durch die Adsorptionseinrichtungen (9a, 9b) umfassen.

7. Einrichtung nach einem der vorangehenden Ansprüche, **dadurch gekennzeichnet, dass** die Filtereinrichtungen (13a, 13b) zum Filtern von NO, NO₂, CO, Feinstaub, Kohlenwasserstoffen und/oder flüchtigen organischen Substanzen ausgebildet sind.

8. Einrichtung nach einem der vorangehenden Ansprüche, **dadurch gekennzeichnet, dass** den zwei Adsorptionseinrichtungen (9a, 9b) eine Ventileinrichtung (23), über die die zuzuführende Luft entweder der einen oder der anderen Adsorptionseinrichtung zuführbar ist, vorgeschaltet ist.

9. Kraftfahrzeug, umfassend eine einen geschlossenen Raum bildende Fahrgastzelle (2) sowie eine Einrichtung (8) zur Reinigung von in der Fahrgastzelle (2) befindlicher, mit CO₂ beladener Luft nach einem der vorangehenden Ansprüche.

10. Kraftfahrzeug nach Anspruch 9, **dadurch gekennzeichnet, dass** eine Belüftungseinrichtung (3), insbesondere umfassend eine Klimaanlage vorgesehen ist, die in einem Umluftbetrieb betreibbar ist, und die mit der Einrichtung (8) zur Reinigung der Luft derart verbunden ist, dass aus der Fahrgastzelle (2) abgezogene Luft der Einrichtung (8) zuführbar und gereinigte Luft in die Fahrgastzelle (8) rückführbar ist.

## Claims

1. Device for cleaning air laden with CO₂ in an enclosed space, comprising two adsorption devices (9a, 9b) for adsorbing CO₂ from the air supplied to the adsorption devices (9a, 9b), a desorption device (15a, 15b) assigned to each of the adsorption devices (9a, 9b) for desorbing adsorbed CO₂, and respectively a removal device (20a, 20b) for removing the desorbed CO₂, wherein one adsorption device (9a, 9b) is adsorbed while the other one is desorbed, and vice versa, **characterised in that** a filter device (13, 13a, 13b) is connected upstream or downstream of each of the adsorption devices (9, 9a, 9b), by means of which filter device pollutants contained in the air to be supplied or in the cleaned air to be supplied back to the space can be filtered out and **in that** a fan (24a, 24b) is connected upstream of each adsorption device (9a, 9b).

2. Device according to claim 1, **characterised in that** each of the adsorption devices (9a, 9b) comprises a housing (10a, 10b) filled with an adsorption agent (11a, 11b), to which the CO₂ laden air can be supplied which is transported via a conveying device, via a respective air supply line (12a, 12b).

3. Device according to claim 1 or 2, **characterised in that** a transport gas can be delivered to the adsorption devices (9a, 9b) by means of the removal device (20a, 20b) and the mixture of transport gas and CO₂ can be removed via a respective exhaust air line (21a, 21b).

4. Device according to claim 3, **characterised in that** each of the removal devices (21a, 21b) further comprises a conveying device for the delivery of the transport gas from a transport gas reservoir or from outside or inside the enclosed space.

5. Device according to claim 3 or 4, **characterised in that** a valve device (25a, 25b) to be opened is provided in the exhaust air lines (21a, 21b) for removing the mixture, or that such a valve device (22, 25a, 25b) is provided upstream of each of the exhaust air lines (21a, 21b).

6. Device according to any of the preceding claims, **characterised in that** each of the desorption devices (15a, 15b) comprises a heating device (16a, 16b) for heating the adsorption agent (11a, 11b) and/or a device for reducing the pressure in the adsorption devices (9a, 9b) and/or a device for supplying and conveying a gas causing the desorption through the adsorption devices (9a, 9b).

7. Device according to any of the preceding claims, **characterised in that** the filter devices (13a, 13b) are designed for filtering NO, NO₂, CO, particulates, hydrocarbons, and/or volatile organic substances.

8. Device according to any of the preceding claims, **characterised in that** a valve device (23) is connected upstream of the two adsorption devices (9a, 9b), by means of which valve device the air to be supplied can be supplied to either one or other of the adsorption devices.

9. Motor vehicle, comprising a passenger compartment (2) forming an enclosed space and a device (8) for cleaning air laden with CO₂ in an enclosed space (2) according to any of the preceding claims.

10. Motor vehicle according to claim 9, **characterised in that** a ventilation device (3) is provided, in particular comprising an air conditioning system, which can be operated in a recirculation mode, and which is connected to the device (8) for cleaning the air in such a way that air removed from the passenger compartment (2) can be supplied to the device (8) and cleaned air can be returned to the passenger compartment (8).

## Revendications

1. Dispositif de nettoyage d'air chargé en CO₂ se trouvant dans un espace fermé, comprenant deux dispositifs d'adsorption (9a, 9b) pour adsorber du CO₂ de l'air amené aux dispositifs d'adsorption (9a, 9b), respectivement un dispositif de désorption (15a, 15b) associé aux dispositifs d'adsorption (9a, 9b) pour désorber le CO₂ adsorbé, ainsi que respectivement un dispositif d'évacuation (20a, 20b) pour évacuer le CO₂ désorbé, dans lequel un dispositif d'adsorption (9a, 9b) adsorbe, tandis que l'autre désorbe, et inversement, **caractérisé en ce qu'**un dispositif de filtrage (13, 13a, 13b) est situé en amont ou en aval de chacun des dispositifs d'adsorption (9, 9a, 9b), au moyen duquel des polluants contenus dans l'air à amener ou l'air propre à ramener à l'espace peuvent être filtrés et **en ce qu'**un ventilateur (24a, 24b) est situé en amont de chaque dispositif d'adsorption (9a, 9b).

2. Dispositif selon la revendication 1, **caractérisé en ce que** les dispositifs d'adsorption (9a, 9b) comprennent respectivement un boîtier (10a, 10b) rempli d'un agent adsorbant (11a, 11b), auxquels l'air chargé en CO₂, transporté par un dispositif de transport peut être amené par respectivement une conduite d'amenée d'air (12a, 12b).

3. Dispositif selon la revendication 1 ou 2, **caractérisé en ce qu'**au moyen du dispositif d'évacuation (20a, 20b) un gaz de transport peut être transporté aux dispositifs d'adsorption (9a, 9b) et le mélange constitué de gaz de transport et de CO₂ peut être évacué par respectivement une conduite d'évacuation d'air (21a, 21b).

4. Dispositif selon la revendication 3, **caractérisé en ce que** les dispositifs d'évacuation (21a, 21b) comprennent respectivement un dispositif de transport pour transporter le gaz de transport hors d'un réservoir de gaz de transport ou de l'extérieur ou de l'intérieur de l'espace fermé.

5. Dispositif selon la revendication 3 ou 4, **caractérisé en ce que** dans les conduites d'évacuation d'air (21a, 21b) est prévu respectivement un dispositif de soupape (25a, 25b) à ouvrir pour évacuer le mélange ou respectivement un tel dispositif de soupape (22, 25a, 25b) est situé en amont des conduites d'évacuation d'air (21a, 21b).

6. Dispositif selon l'une quelconque des revendications précédentes, **caractérisé en ce que** les dispositifs de désorption (15a, 15b) comprennent respectivement un dispositif de chauffage (16a, 16b) pour réchauffer l'adsorbant (11a, 11b) et/ou un dispositif de réduction de la pression dans les dispositifs d'adsorption (9a, 9b) et/ou un dispositif d'amenée et de conduite d'un gaz entraînant la désorption au travers des dispositifs d'adsorption (9a, 9b).

7. Dispositif selon l'une quelconque des revendications précédentes, **caractérisé en ce que** les dispositifs de filtrage (13a, 13b) sont conçus pour le filtrage de NO, NO₂, CO, particules fines, hydrocarbures et/ou substances organiques volatiles.

8. Dispositif selon l'une quelconque des revendications précédentes, **caractérisé en ce qu'**un dispositif de soupape (23) par lequel l'air à amener peut être amené à l'un ou l'autre dispositif d'adsorption est situé en amont des deux dispositifs d'adsorption (9a, 9b).

9. Véhicule automobile, comprenant un habitacle (2) formant un espace fermé ainsi qu'un dispositif (8) de nettoyage d'air chargé en CO₂ se trouvant dans l'habitacle (2) selon l'une quelconque des revendications précédentes.

10. Véhicule automobile selon la revendication 9, **caractérisé en ce qu'**un dispositif d'aération (3), en particulier comprenant un climatiseur est prévu, qui peut être actionné dans une ventilation à circuit fermé, et qui est relié au dispositif (8) de nettoyage de l'air de telle sorte que de l'air retiré de l'habitacle (2) puisse être amené au dispositif (8) et que de l'air nettoyé puisse être ramené dans l'habitacle (8).
